# EUROPEAN PATENT APPLICATION

(11) **EP 4 575 724 A1**
(43) Date of publication of application: **25.06.2025**
(21) Application number: 23862944.8
(22) Date of filing: 24.08.2023
(51) Int. Cl.: G06F 3/01

(54) **INFORMATION PROCESSING DEVICE AND INFORMATION PROCESSING METHOD**

(30) Priority: 07.09.2022 JP 2022141982
(71) Applicant: Sony Group Corporation, Tokyo 108-0075 (JP)
(72) Inventor: NAGANO, Keijiroh, Tokyo 108-0075 (JP); ISHIKAWA, Tsuyoshi, Tokyo 108-0075 (JP); SHIROMA, Shin, Tokyo 108-0075 (JP)
(74) Representative: D Young & Co LLP
(86) International application number: PCT/JP2023/030433
(87) International publication number: WO 2024/053405

(57) **Abstract**

An information processing device includes a control unit that displays an object including a virtual object or a real object in an XR space such that a user can operate the object. The control unit further determines the position and a gesture of a hand of the user with respect to the object and activates a function related to the operation of the object, the function assigned to a combination of the position and the gesture of the hand that correspond to the determination result.

## Description

### Field

The present disclosure relates to an information processing device and an information processing method. Background

In the related art, there is known technology of extended reality (XR) or cross reality, which is image processing technology for fusing a virtual space and a real space, such as virtual reality (VR) and augmented reality (AR).

As an information processing device for providing the XR to a user, a spectacle-type or hat-type head mounted display (HMD) or the like is known. The HMD causes a display in front of the user's eyes to display a virtual object in a similar manner to a real object present in a real space.

Furthermore, the HMD recognizes various operations of the user such as rotation, moving, changing the size, or changing the design with respect to a virtual object by a mounted sensor and activates a function corresponding to the recognized operation to reflect the operation in the virtual object. In recent years, such XR have been remarkably spread in the field of design support such as computer-aided design (CAD) in addition to the entertainment field such as games.

Note that, as a method of recognizing a user's operation and reflecting the user's operation in an object, for example, there is known technology in which a predetermined gesture by a hand or a finger such as a tap operation or a tap and hold operation is assigned to each of functions related to object operations, and a function corresponding to the gesture is activated when a gesture is recognized using sensor information (see, for example, Patent Literature 1).

### Citation List

### Patent Literature

Patent Literature 1: JP 2018-180840 A

### Summary

### Technical Problem

However, there is still room for further improvement in the above-described related art in improving the operability with respect to an object in an XR space.

For example, in the above-described related art, since a gesture that is unlikely to cause a user to recall a desired function is assigned, there is a problem that it is difficult for the user to memorize the operations. In addition, since the number of gestures is limited, there is also a problem that many functions cannot be assigned.

Therefore, the present disclosure proposes an information processing device and an information processing method capable of further improving operability with respect to an object in an XR space.

### Solution to Problem

In order to solve the above problems, one aspect of an information processing device according to the present disclosure includes a control unit that displays an object including a virtual object or a real object in an XR space in such a manner as to be operable by a user. The control unit determines a position and a gesture of a hand of the user with respect to the object; and activates a function related to operation of the object, the function assigned to a combination of the position and the gesture of the hand that correspond to a determination result.

### Brief Description of Drawings

FIG. 1 is a diagram illustrating an exemplary schematic configuration of an information processing device according to an embodiment of the present disclosure.
FIG. 2 is a conceptual diagram in a case where the information processing device is used.
FIG. 3 is a schematic explanatory diagram of an information processing method according to the embodiment of the present disclosure (#1).
FIG. 4 is a schematic explanatory diagram of the information processing method according to the embodiment of the present disclosure (#2).
FIG. 5 is a block diagram illustrating a configuration example of the information processing device according to the embodiment of the present disclosure.
FIG. 6 is a diagram illustrating a specific example of function activation control processing according to the embodiment of the disclosure (#1).
FIG. 7 is a diagram illustrating a specific example of the function activation control processing according to the embodiment of the disclosure (#2).
FIG. 8 is a diagram illustrating a specific example of the function activation control processing according to the embodiment of the disclosure (#3).
FIG. 9 is a diagram illustrating a specific example of the function activation control processing according to the embodiment of the disclosure (#4).
FIG. 10 is a diagram illustrating a specific example of the function activation control processing according to the embodiment of the disclosure (#5).
FIG. 11 is a diagram illustrating a specific example of the function activation control processing according to the embodiment of the disclosure (#6).
FIG. 12 is a diagram illustrating a specific example of the function activation control processing according to the embodiment of the disclosure (#7).
FIG. 13 is a diagram illustrating a specific example of the function activation control processing according to the embodiment of the disclosure (#8).
FIG. 14 is a diagram illustrating a specific example of the function activation control processing according to the embodiment of the disclosure (#9).
FIG. 15 is a diagram illustrating a specific example of the function activation control processing according to the embodiment of the disclosure (#10).
FIG. 16 is a diagram illustrating a specific example of the function activation control processing according to the embodiment of the disclosure (#11).
FIG. 17 is a diagram illustrating a specific example of the function activation control processing according to the embodiment of the disclosure (#12).
FIG. 18 is a diagram illustrating a specific example of the function activation control processing according to the embodiment of the disclosure (#13).
FIG. 19 is a flowchart illustrating a processing procedure executed by the information processing device according to the embodiment of the disclosure.
FIG. 20 is a diagram illustrating a modification of the function activation control processing (#1).
FIG. 21 is a diagram illustrating a modification of the function activation control processing (#2).
FIG. 22 is a diagram illustrating a modification of the function activation control processing (#3).
FIG. 23 is a diagram illustrating a modification of the function activation control processing (#4).
FIG. 24 is a diagram illustrating a modification of the function activation control processing (#5).
FIG. 25 is a diagram illustrating a modification of the function activation control processing (#6).
FIG. 26 is a hardware configuration diagram illustrating an example of a computer that implements the functions of the information processing device. Description of Embodiments

Hereinafter, embodiments of the present disclosure will be described in detail on the basis of the drawings. Note that in each of the following embodiments, the same parts are denoted by the same symbols, and redundant description will be omitted.

Incidentally, hereinafter, a case where an information processing device according to the embodiment of the present disclosure (hereinafter, referred to as "the present embodiment" as appropriate) is a spectacle-type HMD will be described as an example.

In addition, hereinafter, the "XR space" is a generic term for various spaces in the image processing technology that fuses a virtual world and the reality, such as a virtual reality space in VR, an augmented reality space in AR, a mixed reality space in mixed reality (MR), and a substitutional reality space in substitutional reality (SR).

The present disclosure will be described in the following order of items.
1. Overview
1-1. Example of Schematic Configuration of Information Processing Device
1-2. Overview of Information Processing Method According to Present Embodiment
2. Configuration of Information Processing Device
3. Specific Example of Function Activation Control Processing
4. Processing Procedure of Information Processing Device
5. Modifications
6. Hardware Configuration
7. Conclusion

### <<1. Overview>>

### <1-1. Example of Schematic Configuration of Information Processing Device>

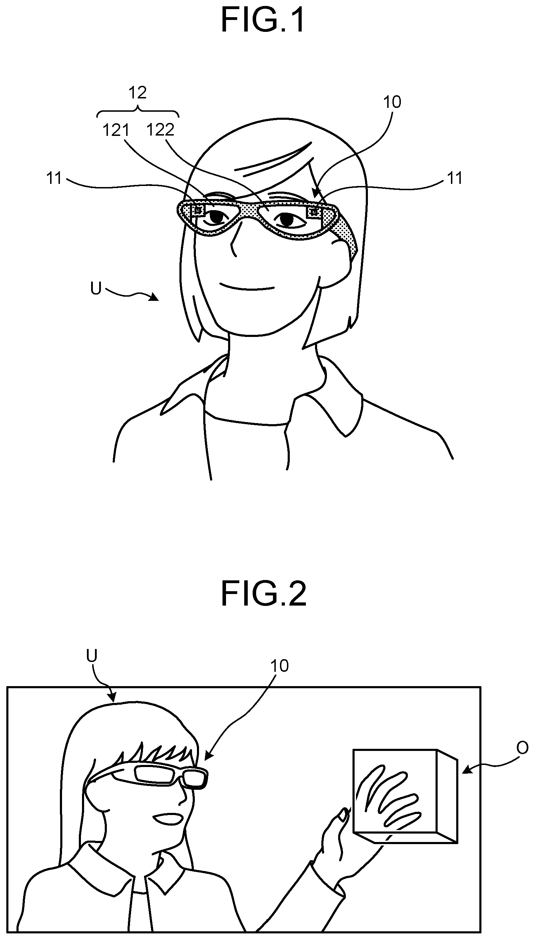

FIG. 1 is a diagram illustrating an exemplary schematic configuration of an information processing device 10 according to an embodiment of the present disclosure. FIG. 2 is a conceptual diagram in a case where the information processing device 10 is used. As illustrated in FIG. 1, the information processing device 10 according to the embodiment of the present disclosure is implemented by, for example, a spectacle-type HMD worn on the head of a user U. The information processing device 10 includes a sensor unit 11 and a display unit 12.

The sensor unit 11 is a sensor group that acquires various types of sensor information regarding, for example, the situation around the user U or the state of the user U. Although the example of FIG. 1 illustrates a stereo configuration in which two sensor units 11 are illustrated, the number of sensor units 11 is not limited.

For example, the sensor unit 11 has a function as a camera for capturing an image of the space in front of the eyes of the user U or the motion of the user U. The sensor unit 11 further has a function as, for example, an inertial measurement unit (IMU) that measures acceleration and angular velocity of the information processing device 10. The information processing device 10 can recognize the motion state or the posture of the user U, a gesture by a hand or fingers performed by the user U, and the like on the basis of sensor information of the sensor unit 11 having such functions.

The display unit 12 corresponds to a spectacle lens portion positioned in front of the eyes of the user U at the time of wearing and has optical transparency. The display unit 12 includes a right-eye display 121 that displays a right-eye image and a left-eye display 122 that displays a left-eye image.

When the information processing device 10 is worn by the user U, as illustrated in FIG. 1, the right-eye display 121 is positioned in front of the right eye of the user U, and the left-eye display 122 is positioned in front of the left eye of the user U.

Incidentally, the display unit 12 is not necessarily divided into the right-eye display 121 and the left-eye display 122, and a right-eye image may be displayed on the right side of an integrally formed display and a left-eye image may be displayed on the left side of the display.

The information processing device 10 can implement stereoscopic vison of various objects O in the XR space including virtual objects ahead of the user U in the line-of-sight direction as illustrated in FIG. 2 by displaying the right-eye image and the left-eye image on the display unit 12.

Note that, in the following description, an example in which the object O has a cubic shape as illustrated in FIG. 2 will be described, but the shape of the object O to be operated by the user U is not limited. Furthermore, in the following description, reference signs such as objects O1, O2, 03... may be assigned depending on a difference in the type of the object O. In a case where it is not necessary to consider a difference in the type, objects are collectively referred to as objects O.

Furthermore, the shape of the information processing device 10 is not limited to the example illustrated in FIGS. 1 and 2. For example, the information processing device 10 may be a headband-type HMD using a band that goes around the entire circumference of the temporal part or a band that passes through the top of the head, a helmet-type HMD in which a visor portion serves as a display, or the like.

### <1-2. Overview of Information Processing Method According to Present Embodiment>

The information processing device 10 recognizes various operations of the user U such as rotation, moving, changing the size, or changing the design with respect to an object O on the basis of the sensor information of the sensor unit 11 and activates a function corresponding to the recognized operation to reflect the operation in the object O. As described above, in recent years, such XR has been remarkably spread not only in entertainment fields such as games but also in design support fields such as CAD.

As existing technology of recognizing the operation of the user U and reflecting the operation in the object O, as described above, there is known technology of assigning a predetermined gesture by a hand or fingers to each of functions related to object operations and activating a function corresponding to the gesture when a gesture is recognized using the sensor information of the sensor unit 11.

However, in the existing technology, since a gesture that is unlikely to cause the user U to recall a function desired by the user U is assigned, there is a problem that it is difficult for the user U to memorize the operations. In addition, since the number of gestures is limited, there is also a problem that many functions cannot be assigned. That is, the existing technology has a room for further improvement in the operability with respect to an object O in an XR space.

Therefore, in the information processing method according to the present embodiment, the information processing device 10 displays an object O including a virtual object or a real object in an XR space in such a manner as to be operable by the user U, determines the position and the gesture of the hand of the user U with respect to the object O, and activates a function related to the operation of the object O, the function assigned to the combination of the position and the gesture of the hand that correspond to the determination result.

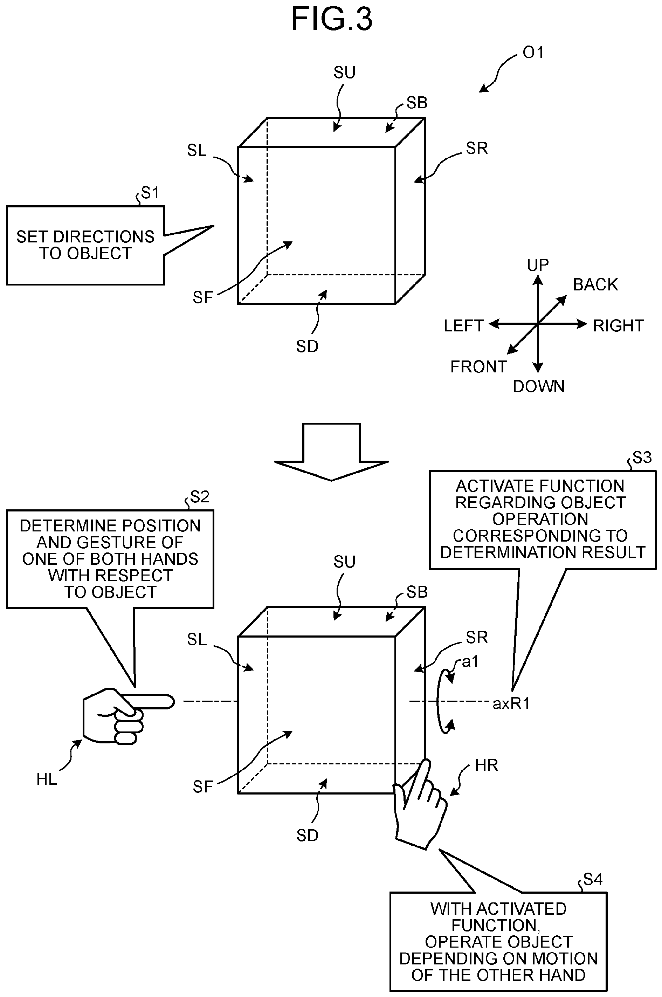

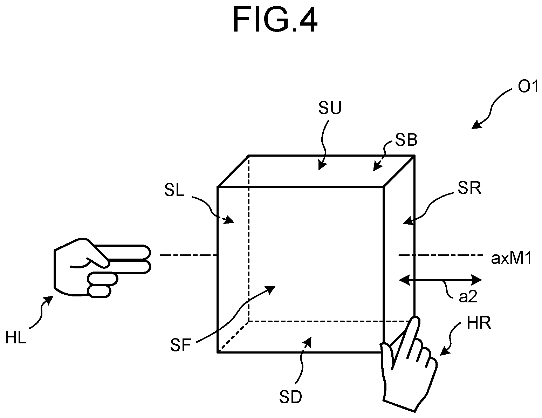

FIG. 3 is a schematic explanatory diagram of the information processing method according to the embodiment of the present disclosure (#1). FIG. 4 is a schematic explanatory diagram of the information processing method according to the embodiment of the present disclosure (#2). Specifically, as illustrated in FIG. 3, the information processing device 10 first sets directions in the object O1 to be operated by the user U (step S1).

More specifically, the information processing device 10 divides the surroundings of the object O1. As illustrated in FIG. 3, in a case where the object O1 has a cubic shape, the information processing device 10 divides the surroundings into, for example, six directions of up, down, left, right, front, and back.

Note that, in the following description, for the object O, a face corresponding to the upward direction may be referred to as a top face SU, a face corresponding to the downward direction may be referred to as a base face SD, a face corresponding to the leftward direction may be referred to as a left face SL, a face corresponding to the rightward direction may be referred to as a right face SR, a face corresponding to the forward direction may be referred to as a front face SF, and a face corresponding to the backward direction may be referred to as a back face SB.

Furthermore, the division into six pieces illustrated herein is merely an example, and the number of divided pieces is not limited. The number of divided pieces may be, for example, ten or sixteen.

Then, the information processing device 10 selects one of the functions related to the operation to be performed on the object O1 by the position and a gesture of one of both hands of the user U, for example, the left hand HL, with respect to the object O1. Furthermore, the information processing device 10 causes the object O1 to be actually operated by the other hand of both hands, for example, the right hand HR.

Specifically, as illustrated in FIG. 3, the information processing device 10 determines the position and a gesture of the one hand of both hands (in this case, the left hand HL) with respect to the object O1 on the basis of the sensor information of the sensor unit 11 (step S2). Then, the information processing device 10 activates a function related to the object operation that corresponds to the determination result (step S3).

Then, the information processing device 10 operates the object O1 depending on the motion of the other hand (in this case, the right hand HR) by the activated function (step S4). FIG. 3 illustrates an example in which, in a case where the user U makes a gesture in which the left hand HL is positioned at a predetermined position on the left side of the object O1 and points at the left face SL with a finger, the information processing device 10 sets, to the object O1, a rotation axis axR1 in the left-right direction penetrating the left face SL and the right face SR and activates a function of rotating the object O1.

In this case, with the user U performing a motion of pinching the object O1 with the right hand HR and moves the object O1 in the up-down direction, the information processing device 10 rotates the object O1 about the rotation axis axR1 (see an arrow a1 in the drawing). Note that, when activating the rotation function in step S3, the information processing device 10 may display the rotation axis axR1 and the arrow a1 for guidance or operation support for the user U.

Meanwhile, FIG. 4 illustrates an example in which, in a case where the user U makes a gesture in which the left hand HL is positioned at a predetermined position on the left side of the object O1 and points at the left face SL with two fingers, the information processing device 10 sets a movement axis axM1 in the left-right direction penetrating the left face SL and the right face SR and activates a function of moving the object O1.

In this case, with the user U performing a motion of pinching the object O1 with the right hand HR and moves the object O1 in the left-right direction, the information processing device 10 moves the object O1 along the movement axis axM1 (see an arrow a2 in the drawing). Note that, similarly to the case of FIG. 3, when activating a movement function in step S3, the information processing device 10 may display the movement axis axM1 and the arrow a2 for guidance or operation support for the user U.

In both the examples of FIG. 3 and FIG. 4, it can be seen that the information processing device 10 sets the rotation axis axR1 or the movement axis axM1 depending on a direction pointed by the left hand HL. That is, in the information processing method according to the present embodiment, the direction of a finger of the left hand HL of the user U corresponds to the axial direction of an operation to be performed on the object O1, whereby the user U can easily recall the function desired by the user U.

As a result, the information processing method according to the present embodiment can facilitate the user U to easily memorize various gestures for various operations on the object O1.

In addition, in the information processing method according to the present embodiment, since each function related to the object operation is activated according to the position of the left hand HL with respect to the object O1 and the gesture, it is possible to assign more functions to at least a combination of the position of the left hand HL and the gesture.

Therefore, according to the information processing method according to the present embodiment, operability with respect to the object O in the XR space can be further improved.

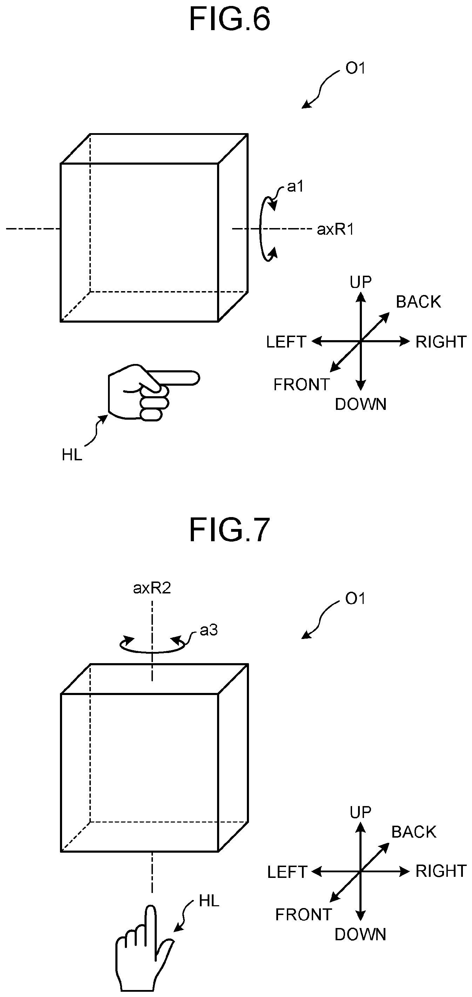

Note that, in the following, the processing in which the information processing device 10 activates a function related to such an object operation as illustrated in FIGS. 3 and 4 depending on a determination result of the position and the gesture of one of both hands of the user U with respect to the object O may be referred to as "function activation control processing". Specific examples and various modifications of the function activation control processing other than those illustrated in FIGS. 3 and 4 will be described later with reference to FIG. 6 and subsequent drawings. Hereinafter, a configuration example of the information processing device 10 applied with the information processing method according to the embodiment will be described more specifically.

### <<2. Configuration of Information Processing Device>>

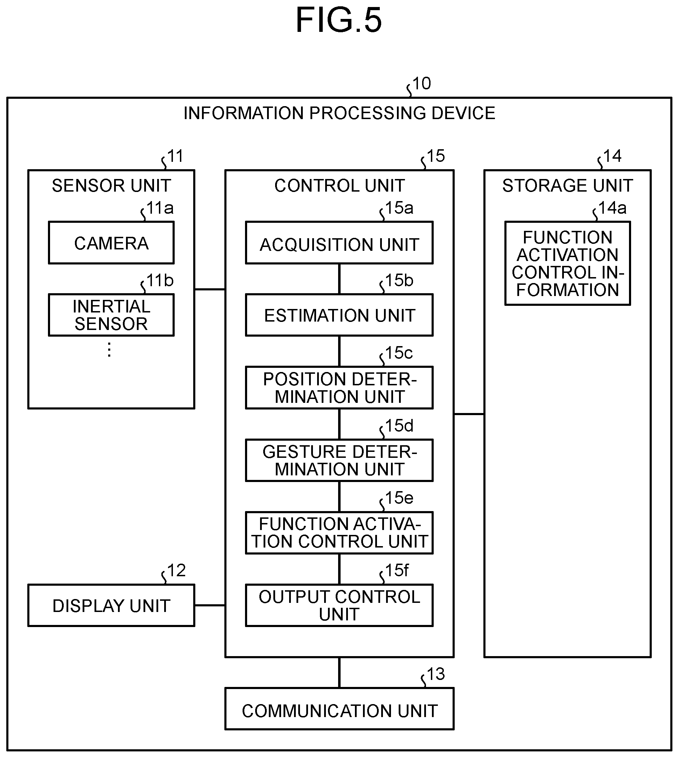

FIG. 5 is a block diagram illustrating a configuration example of the information processing device 10 according to the embodiment of the present disclosure. Note that, in FIG. 5, only components necessary for describing the features of the embodiment are illustrated, and description of general components are omitted.

In other words, each component illustrated in FIG. 5 is conceptual in terms of function and is not necessarily physically configured as illustrated in the drawing. For example, the specific form of distribution or integration of block is not limited to those illustrated in the drawing, and the whole or a part thereof can be functionally or physically distributed or integrated in any unit depending on various loads, use status, or others.

Note that in the description using FIG. 5, description of components that are already described may be simplified or omitted.

As illustrated in FIG. 5, the information processing device 10 includes the sensor unit 11, the display unit 12, a communication unit 13, a storage unit 14, and a control unit 15.

As described above, the sensor unit 11 is a sensor group that acquires various types of sensor information regarding the situation around the user U and the state of the user U. The sensor unit 11 includes a camera 11a and an inertial sensor 11b.

The camera 11a captures an image of a subject (namely, a real object positioned in a real space) positioned in front of the user U. The subject positioned in front of the user U includes a hand and fingers of the user U.

The inertial sensor 11b corresponds to the above-described IMU. The inertial sensor 11b includes an acceleration sensor and an angular velocity sensor (not illustrated). The inertial sensor 11b measures acceleration and angular velocity of the information processing device 10. The information processing device 10 recognizes the orientation of the head or the body of the user U, the posture, the motion of the body, the direction of the field of view, the speed of viewpoint movement, or others on the basis of the sensor information of the inertial sensor 11b.

Note that the sensor unit 11 is not necessarily required to be mounted on the information processing device 10. The sensor unit 11 may be, for example, an external sensor group connected to the information processing device 10 in a wired or wireless manner.

Since the display unit 12 has already been described, description thereof will be omitted here. The communication unit 13 is implemented by a network adapter or the like. The communication unit 13 is connected to a communication network such as the Internet in a wired or wireless manner and transmits and receives information to and from another communication device (for example, an external sensor group or a server device) via the communication network.

The storage unit 14 is implemented by, for example, a storage device such as a random access memory (RAM), a read only memory (ROM), or a flash memory. In the example of FIG. 5, the storage unit 14 stores function activation control information 14a.

The function activation control information 14a is information related to the function activation control processing and includes, for example, definition information of various functions related to an object operation assigned to each combination of a position of the hand of the user U with respect to the object O and a gesture.

Furthermore, although not illustrated, the storage unit 14 stores various programs that operate in the information processing device 10 including a program of the present disclosure.

The control unit 15 is a controller and is implemented by, for example, a central processing unit (CPU), a micro processing unit (MPU), or the like executing various programs stored in the storage unit 14 using the RAM as a work area. Furthermore, the control unit 15 can be implemented by, for example, an integrated circuit such as an application specific integrated circuit (ASIC) or a field programmable gate array (FPGA).

The control unit 15 includes an acquisition unit 15a, an estimation unit 15b, a position determination unit 15c, a gesture determination unit 15d, a function activation control unit 15e, and an output control unit 15f and implements or executes a function or an action of information processing described below.

The acquisition unit 15a acquires various types of sensor information from the sensor unit 11. The estimation unit 15b estimates the position and the gesture of the hand of the user U on the basis of the sensor information acquired by the acquisition unit 15a.

The position determination unit 15c determines the position of one of both hands (in the present embodiment, the left hand HL) of the user U with respect to the object O on the basis of the estimation result of the estimation unit 15b. Furthermore, the position determination unit 15c determines the position of the other hand (in the present embodiment, the right hand HR) for the function activated regarding the object operation. Note that the position determination unit 15c determines whether or not the position of the hand is at a predetermined position; however, the predetermined position does not strictly refer to a position of one point but may refer to a predetermined area.

The gesture determination unit 15d determines the gesture performed by the user U with the one hand on the basis of the estimation result of the estimation unit 15b. Furthermore, the gesture determination unit 15d determines the motion of the other hand with respect to the activated function regarding the object operation.

The function activation control unit 15e selects a function regarding the object operation to be activated on the basis of the function activation control information 14a and the determination results of the position determination unit 15c and the gesture determination unit 15d. The function activation control unit 15e further activates the selected function.

The output control unit 15f controls output of display, sound, tactile sense, and others with respect to the XR space. For example, the output control unit 15f changes the display of the object O on the display unit 12 depending on the motion of the other hand with respect to the one hand by the function activated by the function activation control unit 15e.

### <<3. Specific Example of Function Activation Control Processing>>

Next, various specific examples of the function activation processing executed by the information processing device 10 will be described with reference to FIGS. 6 to 18. FIGS. 6 to 18 are diagrams illustrating a specific example of the function activation control processing according to the embodiment of the disclosure (#1) to (#13).

In FIGS. 3 and 4 already illustrated, an example has been described in which the rotation function or the movement function of the object O1 is activated in a case where the user U positions the left hand HL on the left side of the object O1 and performs a gesture of pointing at the object O1 with one or two fingers.

Meanwhile, as illustrated in FIGS. 6 to 9, a function to be activated may be determined by the position of the left hand HL with respect to the object O1, and an axis of the determined function may be determined by the direction of a finger at the position.

In this case, specifically, as illustrated in FIGS. 6 and 7, for example, in a case where the user U positions the left hand HL below the object O1, the function activation control unit 15e selects the rotation function of the object O1 as the function to be activated.

Then, as illustrated in FIG. 6, for example, when the user U performs a gesture of pointing in the right direction with the left hand HL positioned at a predetermined position below the object O1, the function activation control unit 15e sets, to the object O1, the rotation axis axR1 in the left-right direction. Furthermore, the function activation control unit 15e rotates the object O1 about the rotation axis axR1 by a motion of the right hand HR (see the arrow a1 in the drawing).

Meanwhile, as illustrated in FIG. 7, for example, when the user U performs a gesture of pointing upward with the left hand HL positioned at a predetermined position below the object O1, the function activation control unit 15e sets, to the object O1, a rotation axis axR2 in the up-down direction. Furthermore, the function activation control unit 15e rotates the object O1 about the rotation axis axR2 by a motion of the right hand HR (see an arrow a3 in the drawing).

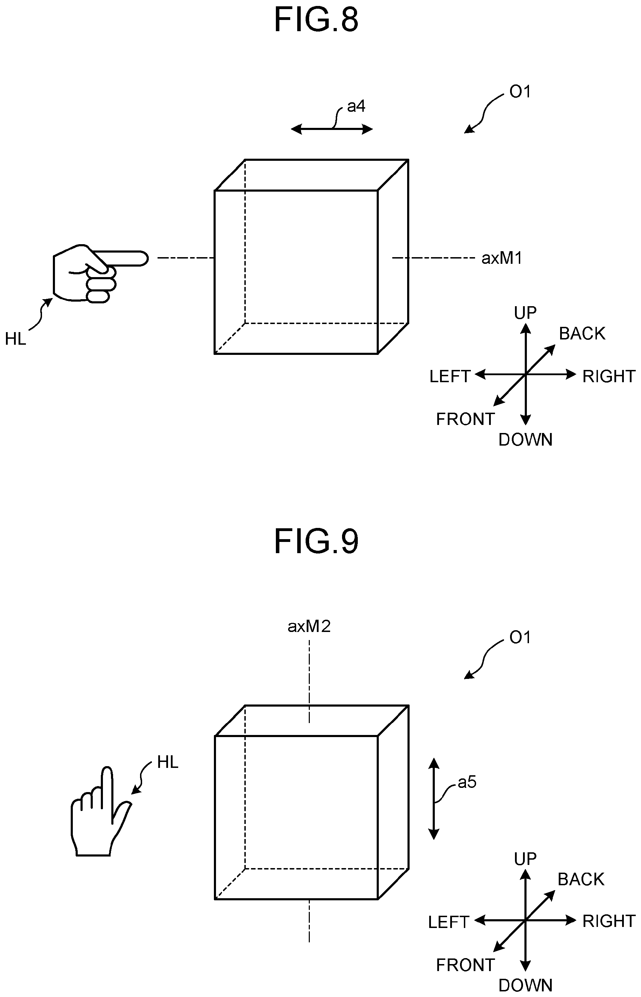

In addition, as illustrated in FIGS. 8 and 9, for example, in a case where the user U positions the left hand HL on the left side of the object O1, the function activation control unit 15e selects the movement function of the object O1 as the function to be activated.

Then, as illustrated in FIG. 8, for example, when the user U performs a gesture of pointing in the right direction with the left hand HL positioned at a predetermined position on the left side of the object O1, the function activation control unit 15e sets, to the object O1, the movement axis axM1 in the left-right direction. Furthermore, the function activation control unit 15e moves the object O1 along the movement axis axM1 by a motion of the right hand HR (see an arrow a4 in the drawing).

Meanwhile, as illustrated in FIG. 9, for example, when the user U performs a gesture of pointing upward with the left hand HL positioned at a predetermined position on the left side of the object O1, the function activation control unit 15e sets, to the object O1, a movement axis axM2 in the up-down direction. Furthermore, the function activation control unit 15e moves the object O1 along the movement axis axM2 by a motion of the right hand HR (see an arrow a5 in the drawing).

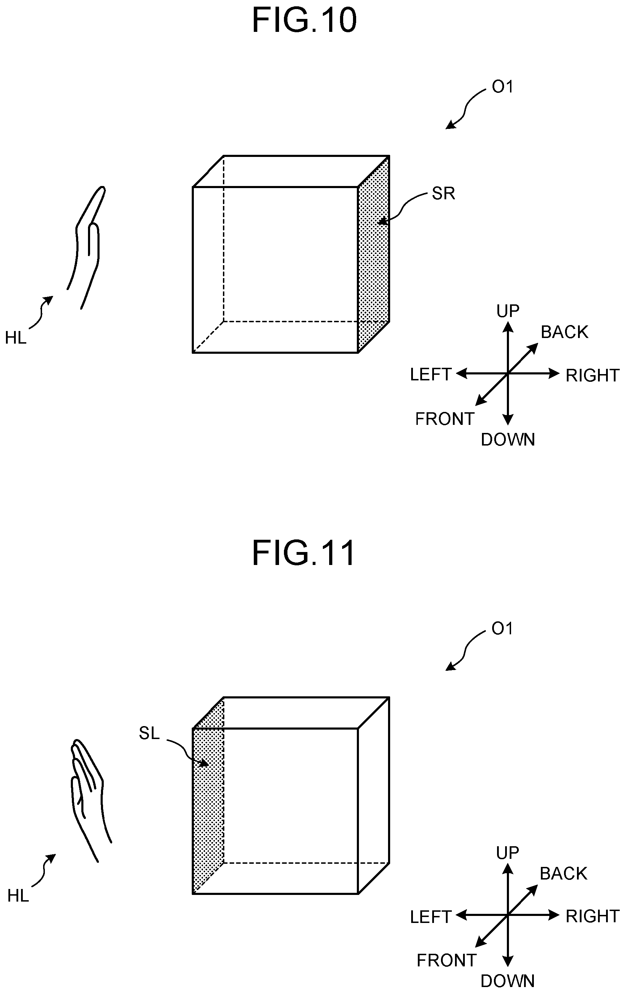

In addition, a part to be operated in the object O1 may be made selectable depending on the orientation of the hand. Specific examples of this case are illustrated in FIGS. 10 and 11.

First, as illustrated in FIG. 10, in a case where the left hand HL is positioned on the left side of the object O1 with the palm facing the object O1, the function activation control unit 15e activates a function of selecting the right face SR.

Meanwhile, as illustrated in FIG. 11, in a case where the left hand HL is positioned on the left side of the object O1 with the back of the hand facing the object O1, the function activation control unit 15e activates a function of selecting the left face SL.

In these examples, in other examples, in a case where the palm is regarded as a first face and the back of the hand as a second face, the function activation control unit 15e selects, out of the faces of the object O1 substantially parallel to the first face and the second face, a face on a side corresponding to the first face depending on the orientation of the hand when the hand of the user U is likened to the object O1. Note that, in this example, a face on a side corresponding to the second face may be selected. In this manner, the function activation control unit 15e can determine a face to be operated in the object O1 depending on the orientation of the hand.

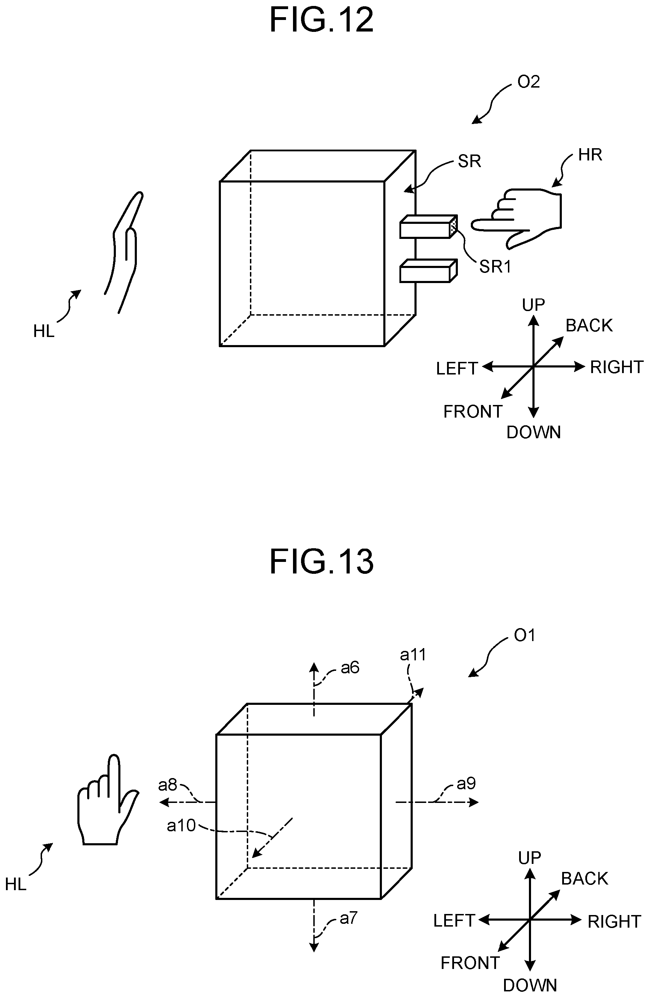

In addition, regarding the examples of FIGS. 10 and 11, a detailed portion on the selected face may be designated using not only the left hand HL but also the right hand HR. A specific example of this case is illustrated in FIG. 12. The example of FIG. 12 is based on a presumption of an object O2 having two protrusions on the right face SR.

As illustrated in FIG. 12, similarly to the example of FIG. 10, in a case where the left hand HL is positioned on the left side of the object O1 with the palm facing the object O1, the function activation control unit 15e activates a function of selecting the right face SR.

In addition, for example, when the right hand HR is positioned at a predetermined position on the right side of the object O2 and points to one of the two protrusions, the function activation control unit 15e selects a face SR1 of the protrusion. In the related art, it has been difficult to designate a desired face, side, or point to be selected if with only one hand; however, by selecting the right face SR in advance with the left hand HL as in the example of FIG. 12, it is possible to easily designate the face SR1 that can be said to be a part of the right face SR.

Furthermore, the guidance display for operation support for the user U described above is not limited to the examples illustrated in FIGS. 3 and 4. Specific examples of this case are illustrated in FIGS. 13 to 16.

In the example of FIG. 13, it is based on the premise that the movement function of moving the object O1 is activated in a case where the left hand HL is positioned at a predetermined position on the left side of the object O1 and a gesture of pointing upward is performed.

In this case, when the movement function is activated, the function activation control unit 15e causes the output control unit 15f to display arrows a6 to a11 corresponding to the above-described respective six directions as a guidance as illustrated in FIG. 13. As a result, the user U can easily grasp that the movement function has been activated by the gesture by the left hand HL and that the object O1 can be moved along each of the arrows a6 to a11.

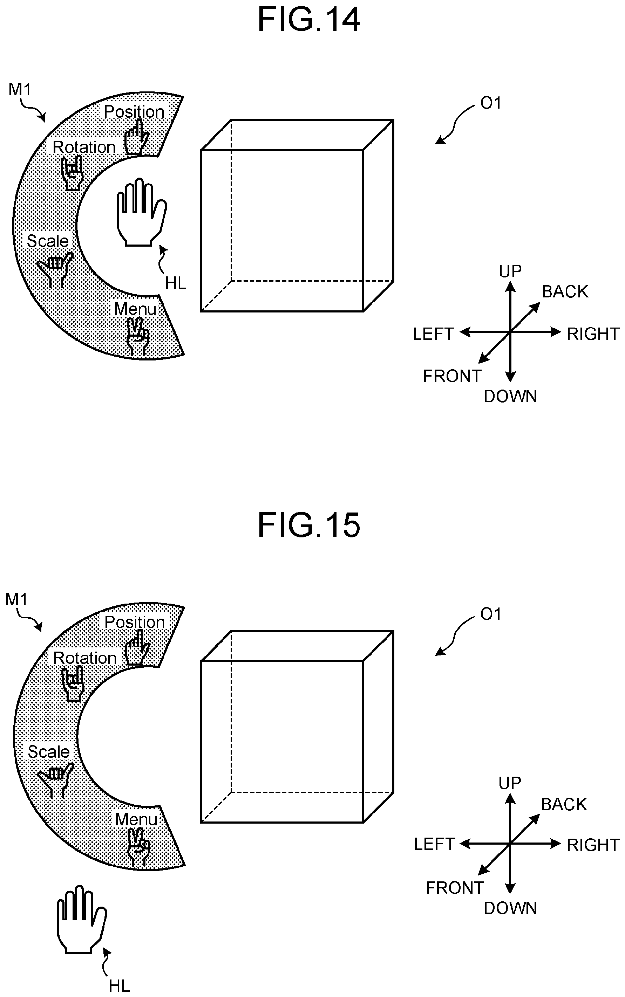

Furthermore, as illustrated in FIG. 14, in a case where the user U positions the left hand HL in any of the upward, downward, leftward, rightward, forward, and backward directions of the object O1, a menu M1 including a list of gesture candidates may be displayed around the left hand HL as guidance.

In this case, the gesture determination unit 15d determines that a gesture has been performed at a point when the state of the left hand HL changes from the state when the left hand HL has moved in one of the upward, downward, leftward, rightward, forward, and backward directions with respect to the object O1. Note that a function to be activated may be assigned to a combination of the position, a first gesture, and a second gesture, such as the first gesture -> movement of the position of the left hand HL -> the second gesture.

Furthermore, although FIG. 14 illustrates an example in which the menu M1 is displayed as guidance in a case where the user U positions the left hand HL in any of the upward, downward, leftward, rightward, forward, and backward directions with respect to the object O1, as illustrated in FIG. 15, a position desirable for the user U may be estimated before the user U moves the left hand HL, and the menu M1 corresponding to the estimated position may be displayed in advance.

In this case, the estimation unit 15b estimates the orientation of the information processing device 10, the movement of the line of sight of the user U, an indicative motion before the left hand HL is moved, and the like on the basis of the sensor information acquired by the acquisition unit 15a and estimates the position desirable for the user U on the basis of the estimation result.

In the examples illustrated in FIGS. 14 and 15, for example, even if the user U does not memorize all the gestures that can be performed for operation of the object O1 in each of the directions with respect to the object O1, the user U can easily grasp the gestures that can be performed while referring to the menu M1.

Note that, in XR, there is a case where a real object present in an XR space is set as an object O and subjected to an operation such as color change.

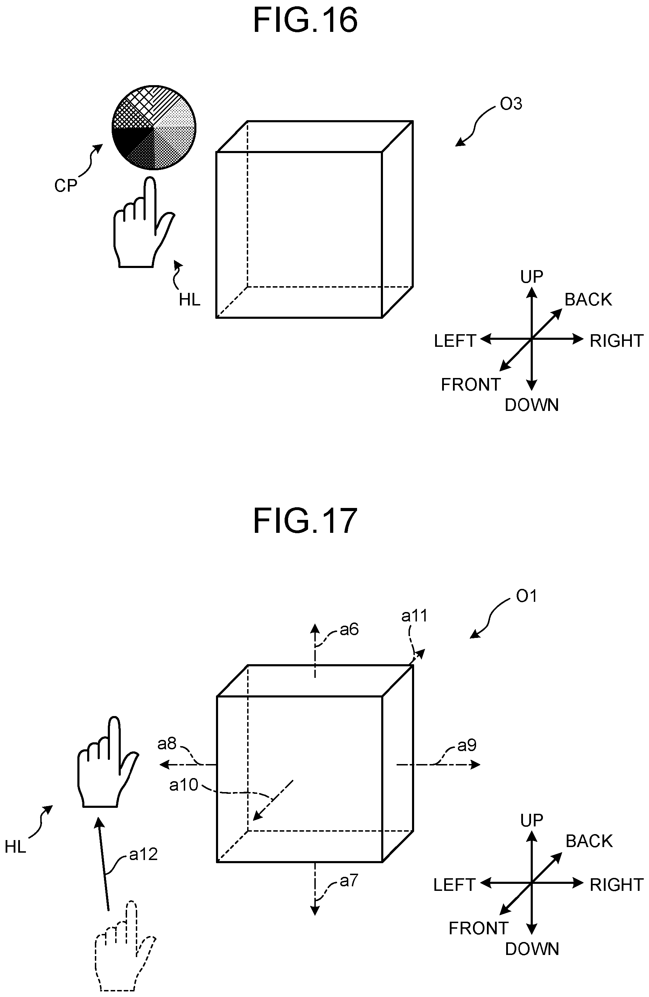

In this case, as illustrated in FIG. 16, in a case where the user U positions the left hand HL in any of the upward, downward, leftward, rightward, forward, and backward directions of the object O3 that is a real object, the function activation control unit 15e activates, for example, a color changing function and displays a color palette CP around the left hand HL.

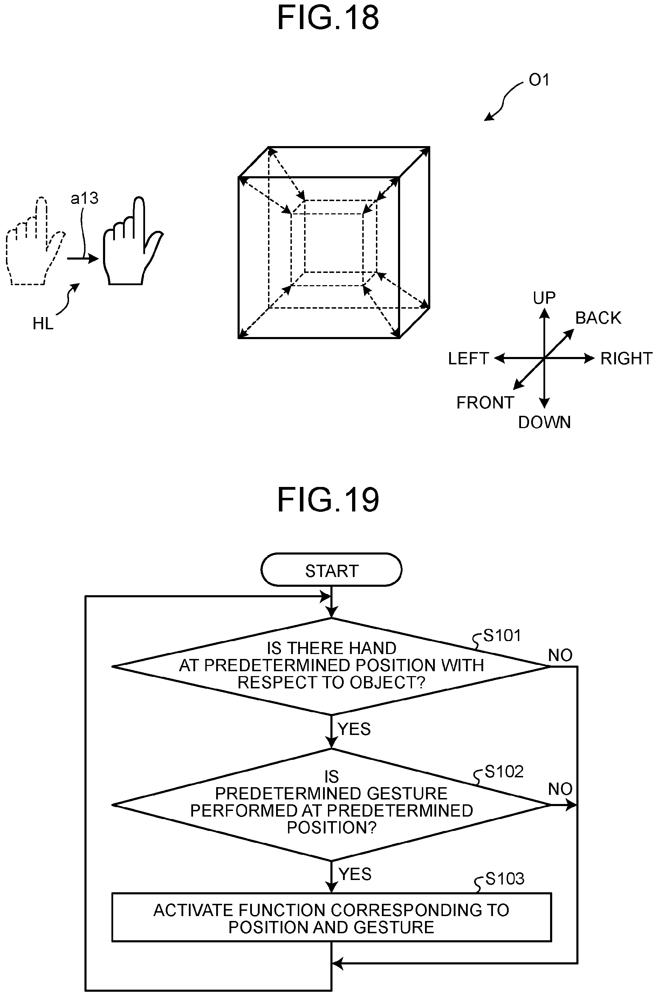

The position of the left hand HL with respect to the object O for activating the function related to the object operation may include not only a position at a single temporal point but also locus information until the left hand HL moves to a specific position. Specific examples of this case are illustrated in FIGS. 17 and 18.

In the example of FIG. 17, similarly to the example illustrated in FIG. 13, it is based on the premise that the movement function of moving the object O1 is activated in a case where the left hand HL is positioned at a predetermined position on the left side of the object O1 and a gesture of pointing upward is performed. However, in the example of FIG. 17, the position determination unit 15c determines, with respect to a predetermined position on the left side of the object O1, the position of the left hand HL including locus information of the left hand HL until reaching the predetermined position.

Specifically, as illustrated in FIG. 17, the position determination unit 15c in this case activates the movement function of the object O1 in a case where the left hand HL moves from a near side toward the left side of the object O1 along a locus indicated by an arrow a12 and reaches the predetermined position on the left side of the object O1.

Meanwhile, in the example of FIG. 18, it is based on the premise that a size changing function of enlarging or reducing the object O1 is activated in a case where the left hand HL is positioned at a predetermined position on the left side of the object O1 and a gesture of pointing upward is performed. Note that, in the example of FIG. 18, similarly to the example of FIG. 17, the position determination unit 15c determines, with respect to the predetermined position on the left side of the object O1, the position of the left hand HL including locus information of the left hand HL until reaching the predetermined position.

Specifically, as illustrated in FIG. 18, the position determination unit 15c in this case activates the size changing function of the object O1 in a case where the left hand HL moves from a further leftward position from the predetermined position on the left side of the object O1 along a locus indicated by an arrow a13 and reaches the predetermined position on the left side of the object O1.

In this way, by setting the position of the left hand HL to include the locus information until the left hand HL reaches the position, the combination pattern of the position of the left hand HL and the gesture increases, so that more functions can be assigned.

### <<4. Processing Procedure of Information Processing Device>>

Next, a processing procedure executed by the information processing device 10 will be described with reference to FIG. 19. FIG. 19 is a flowchart illustrating a processing procedure executed by the information processing device 10 according to the embodiment of the disclosure.

As illustrated in FIG. 19, the control unit 15 of the information processing device 10 determines whether or not there is a hand at a predetermined position with respect to the object O on the basis of the sensor information from the sensor unit 11 (step S101).

If there is no hand at the predetermined position with respect to the object O (step S101, No), the control unit 15 repeats the processing from step S101.

On the other hand, if there is a hand at the predetermined position with respect to the object O (step S101, Yes), the control unit 15 determines whether or not a predetermined gesture has been performed at the position on the basis of the sensor information from the sensor unit 11 (step S102).

If no predetermined gestures have been performed at the position (step S102, No), the control unit 15 repeats the processing from step S101.

On the other hand, if a predetermined gesture has been performed at the position (step S102, Yes), the control unit 15 activates a function corresponding to the position and the gesture (step S103). Then, the control unit 15 repeats the processing from step S101.

### <<5. Modifications>>

Meanwhile, the embodiment of the present disclosure described above can have several modifications.

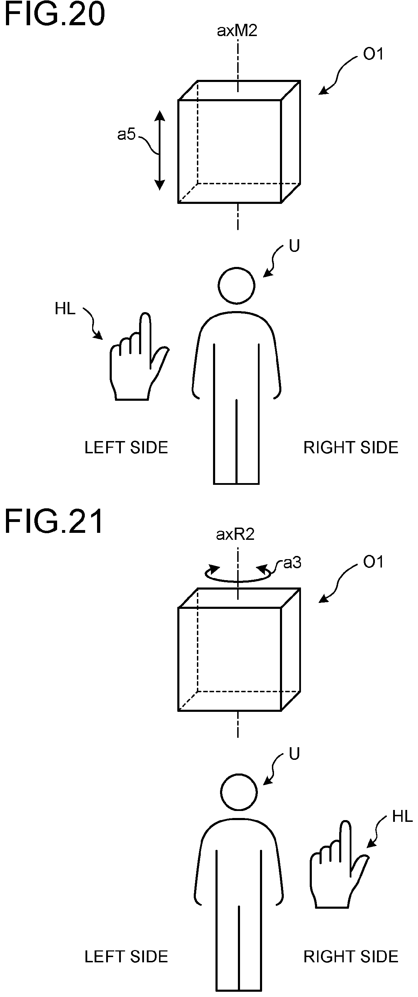

FIGS. 20 to 25 are diagrams illustrating modifications of the function activation control processing (#1) to (#6). In the present embodiment described above, the case where the distance between the user U and the object O is short, and the user U can position the hand at a predetermined position in any of the upward, downward, leftward, rightward, forward, and backward directions of the object O has been described; however, it is also conceivable that the distance between the user U and the object O is long and that remote operation is required.

In this case, the function activation control unit 15e may assign a function related to the operation of the object O to the position and a gesture of a hand with respect to the individual (the user U), for example. In addition, a copy of a remote object O may be generated and displayed at a position in front of the user U within reach by hand, and a function related to the operation of the remote object O may be assigned to the position and a gesture of a hand with respect to the copy. Specific examples of this case are illustrated in FIGS. 20 to 22.

In the case of the remote operation, as illustrated in FIG. 20 as an example, the user U performs a gesture of moving the left hand HL to the left side of the user's body and raising the index finger while facing the object O1. Then, the function activation control unit 15e sets the movement axis axM2 in the up-down direction to the object O1, for example, in a similar manner to that illustrated in FIG. 9 and activates the movement function that enables the object O1 to move along the movement axis axM2 by a motion of the right hand HR (see the arrow a5 in the drawing).

Furthermore, as illustrated in FIG. 21 as another example in the case of the remote operation, the user U performs a gesture of moving the left hand HL to the right side of the user's body and raising the index finger while facing the object O1. Then, the function activation control unit 15e sets the rotation axis axR2 in the up-down direction to the object O1, for example, in a similar manner to that illustrated in FIG. 7 and activates the rotation function that enables the object O1 to rotate about the rotation axis axR2 by a motion of the right hand HR (see the arrow a3 in the drawing).

As a result, a function related to the operation of the object O can also be assigned to the remote object O by the position and a gesture of a hand of the user U.

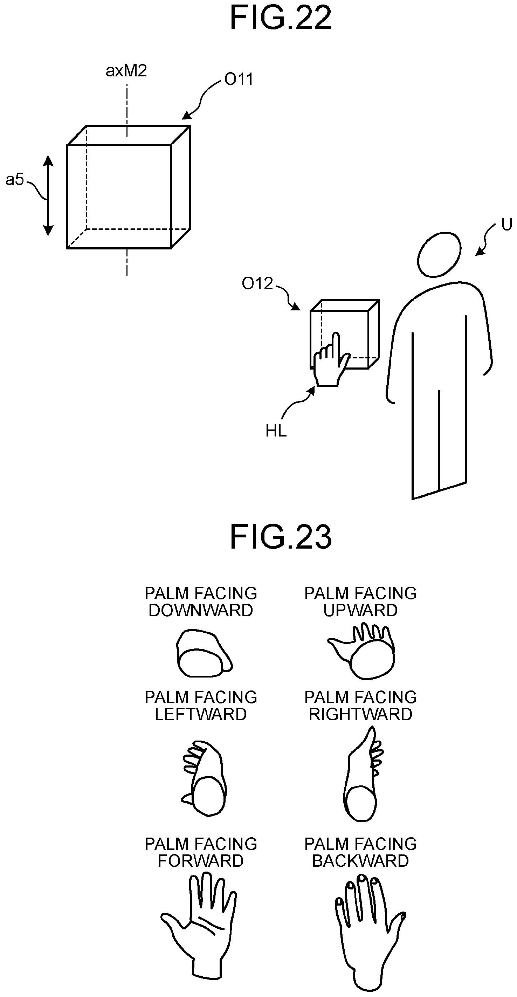

Furthermore, as illustrated in FIG. 22 as still another example in the case of remote operation, the function activation control unit 15e generates, for example, a copy of a remote object O11 which is linked to the object O11 and displays the copy at a position in front of the user U where the user U can reach by hand. Note that the scale of an object 012, which is the copy, is adjusted and displayed as necessary. Then, the function activation control unit 15e activates the function related to the operation of the object O11 depending on the position and a gesture of the left hand HL of the user U with respect to the object 012.

In the example of FIG. 22, the function activation control unit 15e sets, to the object O11, the movement axis axM2 in the up-down direction, for example, in a similar manner to that illustrated in FIG. 20 and activates the movement function that enables the object O11 to move along the movement axis axM2 by a motion of the right hand HR with respect to the object O11 (see the arrow a5 in the drawing).

As a result, a function related to the operation of the object O can also be assigned to the remote object O by the position and a gesture of a hand of the user U with respect to the copy of the remote object O.

In addition, even in the case of the same gesture, different functions to be activated may be assigned if the orientation of the hand is different. As illustrated in FIG. 23, for example, different patterns of the orientation of the hand such as the palm of one hand facing "downward", "upward", "leftward", "rightward", "forward", and "backward" may be set, and different functions may be activated depending on the orientation of the hand even with the same gesture.

In this case, for example, the function activation control unit 15e activates the rotation function for example when the index finger is raised in a state where the palm is facing "downward" or activates the movement function when the index finger is raised in a state where the palm is facing "upward". This makes it possible to assign more functions.

The orientation of the hand may be detected by a hand tracking function by the camera 11a or a camera installed externally, or the orientation of the hand may be detected by an inertial sensor or the like on a device held in hand by the user U or mounted to the hand.

Furthermore, in the present embodiment described above, an example has been described in which the function to be activated is selected by the position and a gesture of the left hand HL of the user U with respect to the object O is selected, and the object O is actually operated by the right hand HR. However, the roles of the left hand HL and the right hand HR may be reversed.

Furthermore, in the present embodiment described above, a function is assigned to the position and a gesture of the hand. However, the position of a device held in hand by the user U or mounted to the hand may be used instead of the position of the hand, and input from a button or a sensor on the device may be used instead of the gesture.

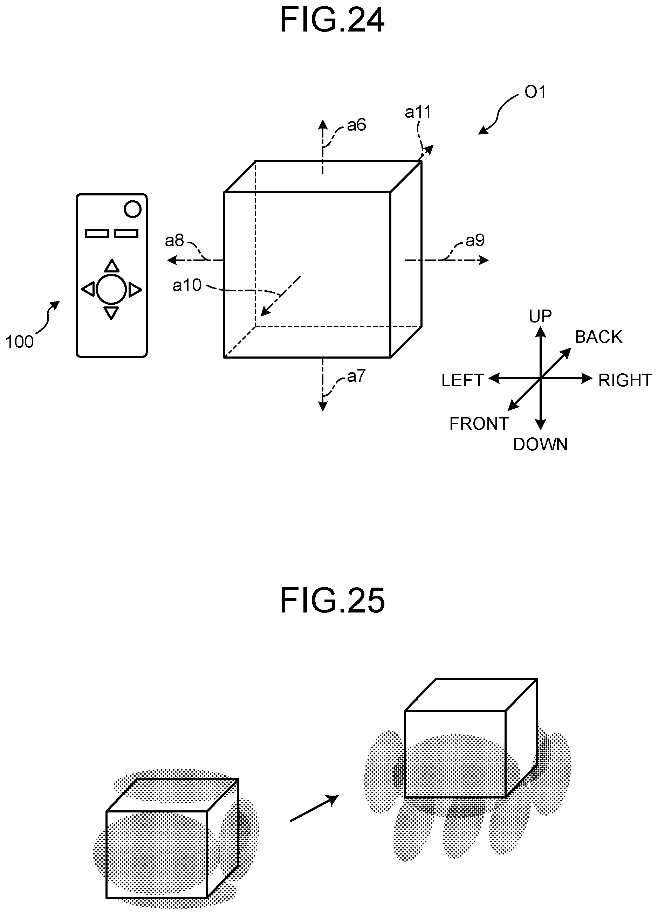

For example, as illustrated in FIG. 24, the function activation control unit 15e substitutes the position of an XR controller 100 held in hand by the user U for the position of the hand and substitutes input from a button or a sensor on the XR controller 100 for the gesture.

Moreover, as illustrated in FIG. 24, when the XR controller 100 is positioned at a predetermined position on the left side of the object O1 and a specific button on the XR controller 100 is pressed, the function activation control unit 15e activates, for example, the movement function of the object O1 in a similar manner to that illustrated in FIG. 13.

Furthermore, in the present embodiment described above, in step S1 described above, the surroundings of the cubic object O1 is divided into, for example, six directions of up, down, left, right, front, and back, and these directions are set. However, the number of divisions and the division places may be modified within a range where the user U's hand can reach the object O.

Specifically, as illustrated in the left diagram of FIG. 25, for example, a predetermined area (see closed curve regions in the drawing) in which the user positions the hand is included on each face of the cubic object, whereas if the same object is positioned at a higher position as illustrated in the right diagram of the drawing, it becomes difficult for the hand of the user U to reach the top face side or the like.

In this case, the predetermined areas in which the user positions the hand may be changed depending on the height position of the object, for example, at any number of divisions and division places around the base face side of the object. Furthermore, a set of gestures effective in each of the predetermined areas may be changed such that the user U can easily perform gestures.

Furthermore, the gesture determination unit 15d may determine whether or a motion of the hand is intended to activate a function or intended to simply move the hand. In this case, for example, in a case where the user U moves a portion other than the fingers such as the back of the hand or the wrist, the gesture determination unit 15d determines that the user U intends to simply move the hand and does not activate a function even if a gesture is detected. On the other hand, in a case where the back of the hand or the wrist is not moving and the hand is at a predetermined position, the gesture determination unit 15d determines that the user intends to activate a function and activates the function when a gesture is detected.

In addition, modes may be switched between a mode in which a function is activated by the position and a gesture of the hand with respect to the object O and a mode of disabling this mode.

It is also possible to keep a function activated while a gesture is being performed with the left hand HL (such as placing the left hand HL on the left side of the object O and continuing the rotation operation with the right hand HR while continuing a finger-pointing gesture). It is also possible to keep a function activated even in a case where the user lowers the hand after performing a gesture with the left hand HL once (such as after placing the left hand HL on the left side of the object O and performing the finger-pointing gesture, even in a case where the left hand HL is separated from the object O, the rotation operation can be performed with the right hand HR).

In the latter case, for example, for fixing the function, the function may be fixed or cancelled with the user U verbally saying "lock", performing specific input from the XR controller 100, a mouse, a keyboard, or the like, or performing a specific gesture.

In addition, when the same function as the function previously used is used, the previous function may be activated only by moving the hand to a predetermined position without performing a gesture.

Furthermore, when the user positions the hand at a predetermined position such as an upper, lower, left, right, front, or back side of the object O, the shape, the color, or the transparency of a virtual object (for example, 3D models of the hand) following the hand may be changed to notify the user of a gesture-standby state.

Furthermore, in the present embodiment described above, the example has been described in which the information processing device 10 that is an HMD is the main execution subject of the information processing of the present embodiment; however, a server device (not illustrated) provided in such a manner as to be communicable with the HMD may be the main execution subject. In this case, a control unit of the server device includes, for example, processing units each corresponding to one of the estimation unit 15b, the position determination unit 15c, the gesture determination unit 15d, and the function activation control unit 15e and executes information processing executed by these processing units on the basis of sensor information transmitted from the HMD.

Among the types of processing described in the above embodiments, all or a part of processing described as that performed automatically can be performed manually, or all or a part of processing described as that performed manually can be performed automatically by a known method. In addition, a processing procedure, a specific name, and information including various types of data or parameters illustrated in the above or in the drawings can be modified as desired unless otherwise specified. For example, various types of information illustrated in the drawings are not limited to the information illustrated.

In addition, each component of each device illustrated in the drawings is conceptual in terms of function and is not necessarily physically configured as illustrated in the drawings. That is, the specific form of distribution and integration of the devices is not limited to those illustrated in the drawings, and all or a part thereof can be functionally or physically distributed or integrated in any unit depending on various loads, use status, or the like.

In addition, the above embodiments can be combined as appropriate as long as the processing content does not contradict each other.

### <<6. Hardware Configuration>>

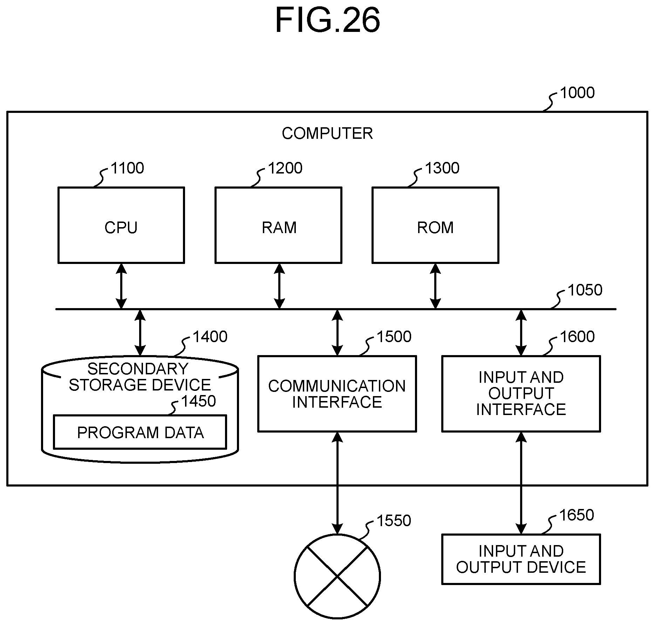

The information processing device 10 according to the present embodiment described above is implemented by a computer 1000 having a configuration as illustrated in FIG. 26, for example. FIG. 26 is a hardware configuration diagram illustrating an example of the computer 1000 that implements the functions of the information processing device 10. The computer 1000 includes a CPU 1100, a RAM 1200, a ROM 1300, a secondary storage device 1400, a communication interface 1500, and an input and output interface 1600. The components of the computer 1000 are connected by a bus 1050.

The CPU 1100 operates in accordance with a program stored in the ROM 1300 or the secondary storage device 1400 and controls each of the components. For example, the CPU 1100 loads a program stored in the ROM 1300 or the secondary storage device 1400 in the RAM 1200 and executes processing corresponding to various programs.

The ROM 1300 stores a boot program such as a basic input output system (BIOS) executed by the CPU 1100 when the computer 1000 is activated, a program dependent on the hardware of the computer 1000, and the like.

The secondary storage device 1400 is a computer-readable recording medium that non-transiently records a program to be executed by the CPU 1100, data used by such a program, and the like. Specifically, the secondary storage device 1400 is a recording medium that records a program according to the present disclosure, which is an example of program data 1450.

The communication interface 1500 is an interface for the computer 1000 to be connected with an external network 1550 (for example, the Internet). For example, the CPU 1100 receives data from another device or transmits data generated by the CPU 1100 to another device via the communication interface 1500.

The input and output interface 1600 is an interface for connecting an input and output device 1650 and the computer 1000. For example, the CPU 1100 receives data from an input device such as a keyboard or a mouse via the input and output interface 1600. The CPU 1100 also transmits data to an output device such as a display, a speaker, or a printer via the input and output interface 1600. Furthermore, the input and output interface 1600 may function as a media interface that reads a program or the like recorded in a predetermined recording medium. A medium refers to, for example, an optical recording medium such as a digital versatile disc (DVD) or a phase change rewritable disk (PD), a magneto-optical recording medium such as a magneto-optical disk (MO), a tape medium, a magnetic recording medium, or a semiconductor memory.

For example, in a case where the computer 1000 functions as the information processing device 10 according to the present embodiment, the CPU 1100 of the computer 1000 implements the function of the control unit 15 by executing a program loaded on the RAM 1200. Furthermore, the secondary storage device 1400 stores the program according to the present disclosure or data in the storage unit 14. Note that although the CPU 1100 reads the program data 1450 from the secondary storage device 1400 and executes the program data 1450, as another example, these programs may be acquired from another device via the external network 1550.

### <<7. Conclusion>>

As described above, according to an embodiment of the present disclosure, the information processing device 10 includes the control unit 15 that displays an object including a virtual object or a real object in an XR space such that the user can operate the object. Furthermore, the control unit 15 determines the position and a gesture of the hand of the user U with respect to the object O and activates a function related to the operation of the object O, the function assigned to a combination of the position and the gesture of the hand that correspond to the determination result. As a result, operability with respect to the object O in the XR space can be further improved.

Although the embodiments of the present disclosure have been described above, the technical scope of the present disclosure is not limited to the above embodiments as they are, and various modifications can be made without departing from the gist of the present disclosure. In addition, components of different embodiments and modifications may be combined as appropriate.

Furthermore, the effects of the embodiments described herein are merely examples and are not limiting, and other effects may be achieved.

Note that the present technology can also have the following configurations.
(1) An information processing device comprising a control unit that displays an object including a virtual object or a real object in an XR space in such a manner as to be operable by a user, wherein
   the control unit:
   determines a position and a gesture of a hand of the user with respect to the object; and
   activates a function related to operation of the object, the function assigned to a combination of the position and the gesture of the hand that correspond to a determination result.
(2) The information processing device according to (1), wherein
   the control unit
   activates the function on a basis of the position and the gesture of the hand by a first hand of both hands of the user.
(3) The information processing device according to (2), wherein
   the control unit
   causes the object to be actually operated by a motion of a second hand of both hands with respect to the first hand.
(4) The information processing device according to (2) or (3), wherein
   the control unit
   activates the function such that a pointing direction forms an axial direction of an operation to be performed on the object in a case where the user performs a gesture of pointing at the object.
(5) The information processing device according to (4), wherein
   the control unit
   sets, to the object, a rotation axis in the pointing direction in a case where a rotation function of rotating the object is activated as the function.
(6) The information processing device according to (4) or (5), wherein
   the control unit
   sets, to the object, a movement axis in the pointing direction in a case where a movement function of moving the object is activated as the function.
(7) The information processing device according to any one of (1) to (6), wherein
   the control unit
   determines the position of the hand including a locus of the hand of the user until reaching the position of the hand.
(8) The information processing device according to (7), wherein
   the control unit
   activates the function assigned to a combination of the position and the gesture of the hand, the position further including the locus of the hand.
(9) The information processing device according to any one of (1) to (8), wherein
   the control unit:
   determines the position and the gesture of the hand with respect to the user in a case where the object is remotely operated; and
   activates the function assigned to the combination of the position and the gesture of the hand with respect to the user, the position and the gesture corresponding to the determination result.
(10) The information processing device according to any one of (1) to (9), wherein
   the control unit,
   in a case where a palm of the user is regarded as a first face and a back of the hand is regarded as a second face, activates a selection function of selecting, out of faces of the object substantially parallel to the first face and the second face, a face corresponding to either the first face or the second face depending on an orientation of the hand when the hand of the user is likened to the object.
(11) The information processing device according to (10), wherein
   the control unit
   activates the selection function by a first hand of both hands of the user and allows a detailed portion of the face of the object selected by the selection function to be further designated by a second hand with respect to the first hand.
(12) An information processing method executed by an information processing device that displays an object including a virtual object or a real object in an XR space in such a manner as to be operable by a user, the information processing method comprising:
   determining a position and a gesture of a hand of the user with respect to the object; and
   activating a function related to operation of the object, the function assigned to a combination of the position and the gesture of the hand that correspond to a determination result.
(13) A program for causing a computer, the computer being an information processing device that displays an object including a virtual object or a real object in an XR space in such a manner as to be operable by a user, to execute:
   determining a position and a gesture of a hand of the user with respect to the object; and
   activating a function related to operation of the object, the function assigned to a combination of the position and the gesture of the hand that correspond to the determination result.

### Reference Signs List

10 INFORMATION PROCESSING DEVICE
11 SENSOR UNIT
11a CAMERA
11b INERTIAL SENSOR
12 DISPLAY UNIT
13 COMMUNICATION UNIT
14 STORAGE UNIT
14a FUNCTION ACTIVATION CONTROL INFORMATION
15 CONTROL UNIT
15a ACQUISITION UNIT
15b ESTIMATION UNIT
15c POSITION DETERMINATION UNIT
15d GESTURE DETERMINATION UNIT
15e FUNCTION ACTIVATION CONTROL UNIT
15f OUTPUT CONTROL UNIT
HL LEFT HAND
HR RIGHT HAND
O OBJECT
U USER

## Claims

1. An information processing device comprising a control unit that displays an object including a virtual object or a real object in an XR space in such a manner as to be operable by a user, wherein
the control unit:
determines a position and a gesture of a hand of the user with respect to the object; and
activates a function related to operation of the object, the function assigned to a combination of the position and the gesture of the hand that correspond to a determination result.

2. The information processing device according to claim 1, wherein
the control unit
activates the function on a basis of the position and the gesture of the hand by a first hand of both hands of the user.

3. The information processing device according to claim 2, wherein
the control unit
causes the object to be actually operated by a motion of a second hand of both hands with respect to the first hand.

4. The information processing device according to claim 2, wherein
the control unit
activates the function such that a pointing direction forms an axial direction of an operation to be performed on the object in a case where the user performs a gesture of pointing at the object.

5. The information processing device according to claim 4, wherein
the control unit
sets, to the object, a rotation axis in the pointing direction in a case where a rotation function of rotating the object is activated as the function.

6. The information processing device according to claim 4, wherein
the control unit
sets, to the object, a movement axis in the pointing direction in a case where a movement function of moving the object is activated as the function.

7. The information processing device according to claim 1, wherein
the control unit
determines the position of the hand including a locus of the hand of the user until reaching the position of the hand.

8. The information processing device according to claim 7, wherein
the control unit
activates the function assigned to a combination of the position and the gesture of the hand, the position further including the locus of the hand.

9. The information processing device according to claim 1, wherein
the control unit:
determines the position and the gesture of the hand with respect to the user in a case where the object is remotely operated; and
activates the function assigned to the combination of the position and the gesture of the hand with respect to the user, the position and the gesture corresponding to the determination result.

10. The information processing device according to claim 1, wherein
the control unit,
in a case where a palm of the user is regarded as a first face and a back of the hand is regarded as a second face, activates a selection function of selecting, out of faces of the object substantially parallel to the first face and the second face, a face corresponding to either the first face or the second face depending on an orientation of the hand when the hand of the user is likened to the object.

11. The information processing device according to claim 10, wherein
the control unit
activates the selection function by a first hand of both hands of the user and allows a detailed portion of the face of the object selected by the selection function to be further designated by a second hand with respect to the first hand.

12. An information processing method executed by an information processing device that displays an object including a virtual object or a real object in an XR space in such a manner as to be operable by a user, the information processing method comprising:
determining a position and a gesture of a hand of the user with respect to the object; and
activating a function related to operation of the object, the function assigned to a combination of the position and the gesture of the hand that correspond to a determination result.
